# EUROPEAN PATENT SPECIFICATION

(11) **EP 1 914 869 B1**
(45) Date of publication and mention of the grant of the patent: **07.07.2010**
(21) Application number: 07117308.2
(22) Date of filing: 26.09.2007
(51) Int. Cl.: H02M 3/158, H02J 7/14, B60K 6/20

(54) **Device for the interconnection and the control of electrical systems of a vehicle**
Vorrichtung zur Verbindung und Steuerung der elektrischen Systeme eines Fahrzeugs
Dispositif pour l'interconnexion et le contrôle des systèmes électriques d'un véhicule

(30) Priority: 27.09.2006 IT TO20060690
(43) Date of publication of application: 23.04.2008
(73) Proprietor: FIAT AUTO S.p.A., 10135 Torino (IT)
(72) Inventor: Kajtazi, Tadeja c/o FIAT AUTO S.p.A., 10135, Torino (IT); Tarquinio, Liborio c/o FIAT AUTO S.p.A., 10135, Torino (IT)
(74) Representative: Jorio, Paolo

(56) References cited:
- GB-A- 2 174 558
- GB-A- 2 357 641
- US-A1- 2003 043 597
- US-B1- 6 617 822

## Description

The present invention relates to a device for the interconnection and the control of electrical systems of a vehicle, in particular of a commercial vehicle.

As is known, some types of commercial vehicles, including, for example, camper vans and ambulances, are generally equipped with two separate electrical systems: a primary system for powering the vehicle electrical consumers and an ancillary system for powering the ancillary electrical consumers present on board the vehicle.

In particular, the primary electrical system comprises a set of vehicle electrical consumers, including, for example, lighting devices, an on-board panel, an electronic control unit, etc., an electrical power source for the vehicle consumers when the vehicle engine is running, i.e. an alternator, and an electrical power source for the vehicle consumers when the latter exceed the alternator's supply capacity (for example, when the engine is off or running at low speed), for example a primary battery, which is also required for the function of starting the vehicle engine.

The ancillary electrical system comprises, on the other hand, a plurality of ancillary consumers including, for example, television sets, refrigerators, electronic equipment, etc., one or more batteries for powering the ancillary consumers, and at least one point of connection to an external electrical power source.

Generally, in this type of vehicle the primary electrical system is connected to the ancillary electrical system by means of a controlled switch (for example a relay) which remains open if the vehicle engine is off, and which closes when the vehicle engine is running, i.e. when the alternator is operating.

When the vehicle engine is running, the controlled switch provides for causing the energy from the alternator to flow both to the primary electrical system and to the ancillary electrical system, so as to simultaneously power the vehicle consumers and the ancillary consumers and, if necessary, to recharge the primary battery and the ancillary battery.

When the vehicle engine is off and the vehicle is connected to a 220 V external electrical power source, for example a parked camper van connected to a power socket made available at a campsite, the ancillary consumers are powered through the external source which, if necessary, recharges the ancillary battery, generally through a special battery charger.

However, when the vehicle engine is off and there is no power source external to the vehicle available, the vehicle consumers can be powered only by the primary battery, while the ancillary consumers can be powered only by the ancillary battery.

When such a situation arises the supply of power to the consumers tends to cause the quantity of charge of the primary battery and of the ancillary battery to reduce, such that both batteries must be periodically recharged so as to always provide for the quantity of energy needed to operate all the electrical equipment on the vehicle.

In particular, the recharging of the batteries can take place in a known way, either by means of the alternator when the vehicle engine is restarted, in which case the batteries effectively act as consumers, or, as mentioned above, by means of a power source external to the vehicle.

Sometimes, such commercial vehicles also provide for photovoltaic solar panels installed on the roof of the vehicle and connected both to the main system and to the ancillary system. In that case, the solar panels, depending on the solar radiation and independently of whether the engine is on or off, supply energy that is used both to power the vehicle and ancillary consumers, and to recharge the primary battery and the ancillary battery.

A system to maintain charge of a vehicle battery when the vehicle is not in use using light energy, so as to decrease occasions when a vehicle operator faces a weakened or dead vehicle battery, is for example disclosed in US-B1-6 617 822. The system utilizes a light-transforming cell that may be supported such that the cell is exposed to light energy and can transform light energy to current, which is communicated with the battery through electrical connectors, which may have a switch.

However, the type of system described above, providing for the powering of the consumers and the recharging of the batteries, exhibits a number of drawbacks and problems including:
- the inability to manage the energy flows between the various power sources, the batteries and the vehicle consumers;
- the inability to ensure an effective and complete recharging of the ancillary batteries due to the separated management of the various power sources used to recharge them and due to the voltage drop that occurs between the alternator and the ancillary battery, which is generally located in the rear part of the vehicle and therefore quite far from the alternator;
- the inability to provide a controlled output voltage level of the primary system to the ancillary system, which affects the recharging of the ancillary batteries; and
- the difficulty in expanding the system by installing more power sources.

An energy management system for a motor vehicle with a bi-directional DC-DC converter is disclosed in GB-A-2 357 641. The energy management system has a first voltage supply terminal having a first nominal voltage and a second voltage supply terminal having a second nominal voltage. At least one of the first and second voltage supply terminals has a battery. A universal bi-directional DC-DC convener is coupled to exchange energy between first and second voltage supply terminals. A third voltage supply terminal in the form of a start aid post for connecting jumper leads to exchange energy between an electrical system of an external vehicle or a battery charger. The energy exchanged between the first and second voltage supply terminals and the third voltage supply terminal is independent of the voltage and polarity of the external vehicle electrical system or battery charger. Either of the first or second voltage supply terminals can supply power to both the other terminal and the third terminal.

The aim of the present invention is to produce a device for the interconnection and control of electrical systems of a vehicle, which device overcomes the abovementioned drawbacks.

According to the present invention, a device is produced for the interconnection and control of electrical systems of a vehicle, as defined in Claim 1

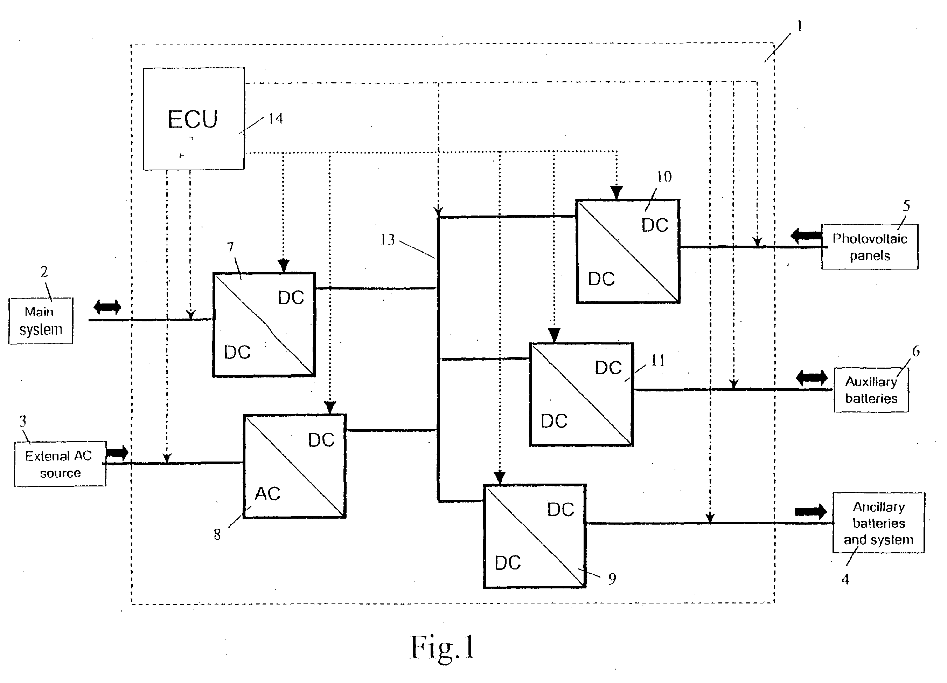

To understand the present invention more clearly, there will now be described a preferred embodiment, purely by way of non-limiting example and with reference to the appended drawing which illustrates a block diagram of the interconnection and control device of the present invention.

In the appended figure there is indicated with the label 1, and represented with a dashed line, a device for the interconnection and control of electrical systems of a vehicle, in particular a motor vehicle (not illustrated).

The interconnection and control device 1 is configured to interconnect:
- a primary electrical system 2 of the vehicle, comprising a starter motor, an alternator, a set of vehicle electrical consumers including, for example, lighting devices, an on-board panel, an electronic control unit, etc., and a primary startup battery (which are not illustrated in the figure);
- an AC electrical power source 3 external to the vehicle, for example an AC socket;
- an ancillary electrical system 4, comprising a plurality of ancillary consumers including, for example, television sets, refrigerators, electronic equipment, etc., and one or more ancillary batteries for powering the ancillary consumers;
- a photovoltaic type electrical power source 5, for example one or more solar panels; and
- at least one auxiliary DC electrical power source 6, inside the vehicle, for example an auxiliary battery;
and to control the energy flows between the electrical energy sources on board the vehicle (alternator, external AC source, solar panels), the storage devices (primary startup battery, ancillary battery, any auxiliary batteries) and the electrical consumers (main and ancillary loads, AC loads), in order to optimise the use of the various energy sources, to ensure that the consumers are always optimally powered and that all the storage devices are constantly and effectively recharged.

To this end, the interconnection and control device 1 comprises:
- an interface 7 of the primary system 2 (primary electrical system interface 7) for connecting all the components of the primary electrical system 2 of the vehicle, i.e. the starter motor, the alternator, the primary battery and the vehicle electrical consumers (lighting devices, on-board panel, electronic control unit, etc.);
- an AC interface 8 for connecting an AC electrical power source 3 external to the vehicle, for example a 230 V, 50 Hz domestic type AC socket;
- an interface 9 of the ancillary system 4, for connecting the components of the ancillary electrical system 4, i.e. of the ancillary consumers including, for example, television sets, refrigerators, electronic equipment, etc., and of the battery or, where available, batteries for powering the ancillary consumers;
- a photovoltaic interface 10 for connecting a photovoltaic type electrical power source 5, for example one or more solar panels;
- an auxiliary sources interface 11 for connecting one or more auxiliary DC electrical power sources 6, inside the vehicle, for example one or more auxiliary batteries;
- a DC voltage bus 13, connected to interfaces 7, 8, 9, 10 and 11 for the interconnection between the primary electrical system 2 of the vehicle, the AC electrical power source 3 external to the vehicle, the ancillary electrical system 4, the photovoltaic type electrical power source 5 and the auxiliary DC electrical power source(s) 6 inside the vehicle; and,
- an electronic control unit 14 connected to the interfaces 7, 8, 9, 10 and 11 and to the bus 13, for controlling the energy flows between the power sources and the consumers.
In particular, the interfaces of the interconnection and control device 1 are formed of devices that provide for managing the energy flow between the components of the system which are connected to the interface and the device 1 and the conversion of the current and voltage values of the components of the system into current and voltage values that are compatible with those of the device 1.

For example, in order to provide a constant voltage value on the bus 13, the interface 7 of the primary system 2 and the photovoltaic interface 10 can, for example, be formed of a DC-to-DC voltage converter intended to convert, respectively, the voltage value at the output of the energy sources of the primary system and the voltage value at the output of the solar panels into a predefined voltage value of the voltage bus 13, for example 14 V. Similarly, the AC interface 8 can be formed of an AC-to-DC voltage converter, capable of converting the alternating voltage at the output of the AC socket into a DC voltage value equal to the predefined voltage value for the bus 13.

Even the interface 9 of the ancillary system 4 and the auxiliary battery interface 11 can be formed of a DC-to-DC converter. In particular, the DC-to-DC converter that forms the ancillary system interface 9 is tasked with controlling the recharging voltage of the ancillary battery, for example maintaining it at a constant value or varying it according to the temperature, while the DC-to-DC converter which forms the auxiliary batteries interface 11 is tasked both with controlling the recharging voltage of the auxiliary battery and with ensuring an adequate output voltage level if these are used to power the ancillary consumers.

In particular, the task of managing the energy flows is assigned to the electronic control unit 14, which continuously measures the input voltage and current of each interface, (the measuring of the voltage and current values is represented in the figure by a dash-dotted line) and, based on the abovementioned voltage and current values, controls each interface (the controlling of the interfaces is represented in the figure by a dotted line) and implements a strategy for controlling the energy flows.

In particular, the idea forming the basis of the strategy implemented by the electronic unit 14 is that of controlling the energy flows so as to always provide a pre-established level of recharging of the primary battery as well as a pre-established level of recharging of the ancillary and auxiliary batteries.

To this end, the electronic control unit 14 measures the voltage and current values of the sources of energy currently available and, based on these values and on environmental conditions, for example the temperature of the batteries, controls the interfaces so as to channel to the ancillary and auxiliary batteries those energy flows coming from the energy sources that are the most suitable for recharging the ancillary and auxiliary batteries, for example in the order photovoltaic panels, external AC source, and primary system alternator, so as to provide pre-established levels of recharging of the ancillary and auxiliary batteries without ever compromising the pre-established level of recharging of the primary battery.

For example, if the vehicle engine is running and the vehicle has solar panels, the electronic control unit 14 channels the energy from the solar panels to the ancillary system and the auxiliary batteries (if available) and any surplus energy to the primary system 2, lightening the electrical load on the alternator. Thus both the powering of the consumers and the recharging of the primary battery and of the ancillary and auxiliary batteries are optimised.

Otherwise, for example, if:
- the vehicle engine is off,
- the device 1 is connected to an external AC power source, and
- the vehicle has solar panels connected to the device 1 which at present supply 80 W of power,
assuming that the consumers of the ancillary system require 100 W of power, the electronic control unit 14 controls:
- the photovoltaic interface 10 so as to channel the 80 W of power being supplied by the solar panels to the ancillary consumers, and
- the external source interface 8 so as to channel some of the energy supplied by the AC socket (in the example, the remaining 20 W required) to the ancillary consumers, and the remaining energy supplied by the AC socket to any active vehicle consumers and the primary battery, the ancillary batteries and the auxiliary batteries so as to recharge them.

Otherwise, if the electronic control unit 14 measures an output voltage value of the primary battery as less than a predefined threshold value that is not sufficient to power the vehicle consumers, the electronic control unit 14 controls the interfaces of all the energy sources currently available so as to channel the energy currently available to the primary system so as to recharge the primary battery in the most effective manner in order to ensure that it functions.

Furthermore, the electronic control unit 14 is configured to control the interfaces 7, 8, 9, 10 and 11 and to manage the energy flows so as to recharge the ancillary battery and to power the ancillary consumers under running-engine conditions with the alternator in operation and without a photovoltaic source.

By examining the features of the device for the interconnection and control of electrical systems of a vehicle produced according to the present invention, the advantages brought about by the invention are clear.

In particular, the device of the invention enables;
- optimised management of the ancillary and auxiliary batteries so as to prolong their life;
- management of the photovoltaic input so as to always direct the available energy to the consumer that is most in need of it, with the term "consumer" understood to also mean all the batteries on board the vehicle, and to thus maximise the energy balance benefits of the vehicle by virtue also of minimising the power required at the alternator and at the engine with fuel consumption benefits;
- the recharging of all the batteries on board the vehicle to be modulated according to maximum recharging efficiency strategies.

Finally, it is clear that modifications to and variants of the device for the interconnection and control of electrical systems of a vehicle, as described and illustrated here, can be introduced without thereby departing from the protective scope of the present invention, which protective scope is defined in the appended claims.

The device 1 could, for example, either provide for more interfaces for the interconnection of other types of electrical systems or provide for the possibility of customising the interfaces based on the electrical systems installed by the user.

## Claims

1. Device (1) for interconnecting first and second electrical systems (2, 4) of a vehicle and at least one electrical power source (3, 5) external to the vehicle; the first electrical system (2) comprising a starter motor, an alternator, a primary electrical energy storage device and at least one electrical consumer; the second electrical system (4) comprising at least one ancillary electrical consumer and an electrical energy storage device for powering the ancillary electrical consumer; and the external electrical power source (3, 5) comprising an AC electrical power source (3) and/or a photovoltaic electrical power source (5); the interconnection device (1) comprising first and second interfaces (7, 9) for the connection of the first (2) and respectively the second (4) electrical systems, at least a third interface (8, 10) for the connection of the external electrical power source (3, 5), electrical energy transmission means (13) connected to the first, second and third interfaces (7, 8, 9, 10) to transmit energy supplied by the alternator, the AC electrical power source (3) and/or the photovoltaic electrical power source (5) to the primary electrical energy storage device, the electrical consumer, the ancillary electrical consumer and the electrical energy storage device for powering the ancillary electrical consumer, and an electronic control unit (14) configured to control the first (7), second (9) and third interfaces (8, 10) according to an energy flow control strategy designed to control the energy flows between the first electrical system (2), the second electrical system (4) and the external electrical power source (3, 5) based on operating conditions of the first (7), second (9) and third (8, 10) interfaces; the first and second interfaces comprising respective DC/DC converters (7, 9), the third interface (8, 10) comprising an AC/DC converter (10) for the connection of the AC electrical power source (3) and/or a DC/DC converter (8) for the connection of the photovoltaic electrical power source (5), and the electrical energy transmission means comprising a DC voltage bus (13); and the energy flow control strategy being designed to distribute the energy supplied by the alternator, the AC electrical power source (3) and/or the photovoltaic electrical power source (5) between the primary electrical energy storage device, the electrical consumer, the ancillary electrical consumer and the electrical energy storage device for powering the ancillary electrical consumer so as to ensure a first pre-determined recharging level of the primary electrical energy storage device and a second pre-determined recharging level of the electrical energy storage device for powering the ancillary electrical consumer
and wherein the electronic control unit (14) is configured to implement the energy flow control strategy as a function of a temperature of the primary electrical energy storage device and of a temperature of the electrical energy storage device for powering the ancillary electrical consumer.

2. Device according to claim 1, wherein the first, second and third interfaces (7, 8, 9, 10) are configured to convert an input electrical voltage into a predefined output voltage required for the operation of the DC voltage bus(13).

3. Vehicle comprising a device (1) for interconnecting first and second electrical systems (2, 4) of a vehicle and at least one electrical power source (3, 5) external to the vehicle, as defined in any one of the preceding claims.

## Patentansprüche

1. Einrichtung (1) zum Miteinanderverbinden einer ersten und einer zweiten elektrischen Anlage (2, 4) eines Fahrzeugs und mindestens einer elektrischen Energiequelle (3, 5) außerhalb des Fahrzeugs; wobei die erste elektrische Anlage (2) einen Anlasser, einen Drehstromgenerator, eine primäre Speichereinrichtung für elektrische Energie und mindestens einen elektrischen Verbraucher umfasst; wobei die zweite elektrische Anlage (4) mindestens einen zusätzlichen elektrischen Verbraucher und eine Speichereinrichtung für elektrische Energie zum Speisen des zusätzlichen elektrischen Verbrauchers umfasst; und wobei die externe elektrische Energiequelle (3, 5) eine Wechselstromquelle (3) und/oder eine photovoltaische elektrische Energiequelle (5) umfasst; wobei die Verbindungseinrichtung (1) eine erste und zweite Schnittstelle (7, 9) für den Anschluss der ersten (2) bzw. der zweiten (4) elektrischen Anlage, mindestens eine dritte Schnittstelle (8, 10) für den Anschluss der externen elektrischen Energiequelle (3, 5), Mittel zur Übertragung elektrischer Energie (13), die mit der ersten, zweiten und dritten Schnittstelle (7, 8, 9, 10) verbunden sind, um Energie, die von dem Drehstromgenerator, der Wechselstromquelle (3) und/oder der photovoltaischen elektrischen Energiequelle (5) geliefert wird, zu der primären Speichereinrichtung für elektrische Energie, dem elektrischen Verbraucher, dem zusätzlichen elektrischen Verbraucher und der Speichereinrichtung für elektrische Energie zum Speisen des zusätzlichen elektrischen Verbrauchers zu übertragen, und eine elektronische Steuereinheit (14), die dafür konfiguriert ist, die erste (7), zweite (9) und dritte Schnittstelle (8, 10) entsprechend einer Energiefluss-Steuerungsstrategie zu steuern, die dafür ausgelegt ist, die Energieflüsse zwischen der ersten elektrischen Anlage (2), der zweiten elektrischen Anlage (4) und der externen elektrischen Energiequelle (3, 5) auf der Basis von Betriebsbedingungen der ersten (7), zweiten (9) und dritten (8, 10) Schnittstelle zu steuern, umfasst; wobei die erste und zweite Schnittstelle jeweils einen DC/DC-Wandler (7, 9) umfassen, die dritte Schnittstelle (8, 10) einen AC/DC-Wandler (10) für den Anschluss der Wechselstromquelle (3) und/oder einen DC/DC-Wandler (8) für den Anschluss der photovoltaischen elektrischen Energiequelle (5) umfasst und die Mittel zur Übertragung elektrischer Energie einen Gleichspannungsbus (13) umfassen; und wobei die Energiefluss-Steuerungsstrategie dafür ausgelegt ist, die Energie, die von dem Drehstromgenerator, der Wechselstromquelle (3) und/oder der photovoltaischen elektrischen Energiequelle (5) geliefert wird, zwischen der primären Speichereinrichtung für elektrische Energie, dem elektrischen Verbraucher, dem zusätzlichen elektrischen Verbraucher und der Speichereinrichtung für elektrische Energie zum Speisen des zusätzlichen elektrischen Verbrauchers so zu verteilen, dass ein erster vorgegebener Wiederaufladepegel der primären Speichereinrichtung für elektrische Energie und ein zweiter vorgegebener Wiederaufladepegel der Speichereinrichtung für elektrische Energie zum Speisen des zusätzlichen elektrischen Verbrauchers sichergestellt werden, wobei die elektronische Steuereinheit (14) dafür konfiguriert ist, die Energiefluss-Steuerungsstrategie als eine Funktion einer Temperatur der primären Speichereinrichtung für elektrische Energie und einer Temperatur der Speichereinrichtung für elektrische Energie zum Speisen des zusätzlichen elektrischen Verbrauchers zu implementieren.

2. Einrichtung nach Anspruch 1, wobei die erste, zweite und dritte Schnittstelle (7, 8, 9, 10) dafür konfiguriert sind, eine elektrische Eingangsspannung in eine vordefinierte Ausgangsspannung umzuwandeln, die für den Betrieb des Gleichspannungsbusses (13) benötigt wird.

3. Fahrzeug, das eine Einrichtung (1) zum Miteinanderverbinden einer ersten und einer zweiten elektrischen Anlage (2, 4) eines Fahrzeugs und mindestens einer elektrischen Energiequelle (3, 5) außerhalb des Fahrzeugs, wie in einem der vorhergehenden Ansprüche definiert, umfasst.

## Revendications

1. Dispositif (1) destiné à interconnecter des premier et deuxième systèmes électriques (2, 4) d'un véhicule et au moins une source de courant électrique (3, 5) externe au véhicule ; le premier système électrique (2) comprenant un démarreur, un alternateur, un dispositif principal de stockage de l'énergie électrique et au moins un consommateur électrique ; le deuxième système électrique (4) comprenant au moins un consommateur électrique auxiliaire et un dispositif de stockage de l'énergie électrique pour alimenter le consommateur électrique auxiliaire ; et la source de courant électrique externe (3, 5) comprenant une source de courant électrique en AC (3) et/ou une source de courant électrique photovoltaïque (5) ; le dispositif d'interconnexion (1) comprenant des première et deuxième interfaces (7, 9) pour la connexion du premier (2) et respectivement du deuxième (4) système électrique, au moins une troisième interface (8, 10) pour la connexion de la source de courant électrique externe (3, 5), un moyen de transmission de l'énergie électrique (13) connecté aux première, deuxième et troisième interfaces (7, 8, 9, 10) pour transmettre l'énergie fournie par l'alternateur, la source de courant électrique en AC (3) et/ou la une source de courant électrique photovoltaïque (5) au dispositif principal de stockage d'énergie électrique, au consommateur électrique, au consommateur électrique auxiliaire et au dispositif de stockage d'énergie électrique pour alimenter le consommateur électrique auxiliaire, et une unité de commande électronique (14) configurée pour commander les première (7), deuxième (9) et troisième interfaces (8, 10) selon une stratégie de commande de flux d'énergie conçue pour commander les flux d'énergie entre le premier système électrique (2), le deuxième système électrique (4) et la source de courant électrique externe (3, 5) en se basant sur les conditions de fonctionnement des première (7), deuxième (9) et troisième interfaces (8, 10) ; les premières et deuxième interfaces comprenant des convertisseurs respectifs DC/DC (7, 9), la troisième interface (8, 10) comprenant un convertisseur AC/DC (10) pour la connexion de la source de courant électrique en AC (3) et/ou un convertisseur DC/DC (8) pour la connexion de la source de courant électrique photovoltaïque (5), et le moyen de transmission de l'énergie électrique comprenant un bus de tension DC (13) ; et la stratégie de commande de flux d'énergie étant conçue pour distribuer l'énergie fournie par l'alternateur, la source de courant électrique en AC (3) et/ou la source de courant électrique photovoltaïque (5) entre le dispositif principal de stockage de l'énergie électrique, le consommateur électrique, le consommateur électrique auxiliaire et le dispositif de stockage de l'énergie électrique pour alimenter le consommateur électrique auxiliaire de façon à garantir un premier niveau de rechargement pré-déterminé du dispositif principal de stockage de l'énergie électrique et un deuxième niveau de rechargement pré-déterminé du dispositif de stockage de l'énergie électrique pour alimenter le consommateur électrique auxiliaire, et dans lequel l'unité de commande électronique (14) est configurée pour implémenter la stratégie de commande de flux d'énergie en fonction d'une température du dispositif principal de stockage de l'énergie électrique et d'une température du dispositif de stockage de l'énergie électrique pour alimenter le consommateur électrique auxiliaire.

2. Dispositif selon la revendication 1, dans lequel les première, deuxième et troisième interfaces (7, 8, 9, 10) sont configurées pour convertir une tension électrique d'entrée en une tension de sortie prédéfinie requise pour le fonctionnement du bus de tension DC (13).

3. Véhicule comprenant un dispositif (1) pour interconnecter des premier et deuxième systèmes électriques (2, 4) d'un véhicule et au moins une source de courant électrique (3, 5) externe au véhicule, comme défini dans l'une quelconque des revendications précédentes.
